# EUROPEAN PATENT APPLICATION

(11) **EP 4 470 359 A1**
(43) Date of publication of application: **04.12.2024**
(21) Application number: 24178700.1
(22) Date of filing: 29.05.2024
(51) Int. Cl.: A01D 43/06, A01D 43/077, A01D 45/26, A01D 57/20, A01D 61/00

(54) **MACHINE FOR HARVESTING HORTICULTURAL PRODUCTS**

(30) Priority: 01.06.2023 IT 202300011241
(71) Applicant: Hortech S.r.l., 35021 Agna (PD) (IT)
(72) Inventor: GALLO, Antonio, 35020 ARRE (PD) (IT)
(74) Representative: Corradini, Corrado

(57) **Abstract**

A machine 10 for harvesting horticultural products, in particular leafy vegetables, comprises a support structure 20 mainly extending predominantly along a movement direction M of the machine 10, between a first end 11 and a second end 12; cutting means 30 mechanically associated with said support structure 20, arranged at said first end 11 and configured to cut said horticultural products; conveying means 40 mechanically connected to said support structure 20 and extending, along a conveying direction R, between a harvesting portion 41 arranged near said first end 11, and an outlet portion 42 arranged near a receiving area of said support structure 20, and configured to convey said cut horticultural products along said conveying direction R; motorisation means 50 mechanically associated with said conveying means 40 and configured to move them so as to convey said cut horticultural products; wherein said conveying means 40 comprise a first carrier 60; and a second carrier 70 arranged counter-facing said first carrier 60 by a predetermined distance so as to define an upwards tunnel 80 of said horticultural products; wherein said first and second carriers 60, 70 being arranged inclined with respect to a horizontal plane substantially parallel to the ground; and wherein said first and second carriers 60, 70 extending along said conveying direction R so as to allow a harvesting of said horticultural products along said conveying direction R from a starting height near the ground to a collection height greater than said starting height.

## Description

### Technical Field

The present invention concerns a machine for harvesting horticultural products, in particular leafy vegetables, such as turnip greens, celery, radicchio and various types of lettuce (e.g., lamb's lettuce).

In more detail, the machine in question is intended to be advantageously used in the agricultural machinery sector for harvesting or transplanting horticultural products and, more in general, herbaceous plants, such as those mentioned above, and in particular intended to operate in confined agricultural environments, e.g., greenhouses and/or the like.

Therefore, the machine for harvesting horticultural products which is the subject-matter of the present invention fits advantageously in the industrial sector of the production and commercialisation of agricultural machines for harvesting leafy vegetables, in particular lettuce and the like, as well as in the sector of the production and commercialisation of accessories and equipment for the aforesaid machines.

### State of the art

Presently, the use is known in the aforesaid technical reference sector of machines for carrying out the bulk harvest of herbaceous plants, in particular leafy vegetables such as lettuce, lamb's lettuce, rocket and many others.

Generally, such machines comprise a support structure configured to carry wheels and/or tracks to move the machine itself along a movement direction, e.g., along farmland. Such machines further comprise cutting means, e.g., a shear blade, mechanically connected to a front portion of the support structure and, in use, arranged near the ground to cut the horticultural products as the machine advances.

The known type machines further comprise conveying means, for moving the freshly cut horticultural products, and conveying them towards a collection area situated within the support structure.

In more detail, such conveying means typically comprise a movable belt, e.g., a conveyor belt mechanically connected to the support structure and extending between a first end arranged near the shear blade and a second end, opposite the first end and facing the aforesaid collection area situated within the support structure.

Such a movable belt is configured so as to lift and transport the freshly cut horticultural products from a lowered position near the ground to a raised position belonging to the support structure.

As already known from the Italian patent 102019000008112 filed by the same Applicant, the conveying means further comprise a perforated plate, viz., having multiple openings/slots, mechanically connected to the support structure and arranged opposite the movable belt so as to create a transit volume, e.g., a transport channel, within which the horticultural products are moved and conveyed from the ground towards the collection area. In other words, such a perforated plate is shaped so as to create a substantially compartmentalised area, viz., a transit volume, when associated with the belt.

The known machine types further comprise a fan or a blower mechanically and fluid-dynamically connected to the perforated plate by means of a suction duct, and configured to generate a vacuum within the transport channel to support the upward movement of the freshly cut horticultural products along the movable belt.

In more detail, the fan sucks the air present in the transport duct of the horticultural products and this generates a vacuum which in turn produces a force of attraction of the horticultural products themselves along such a suction direction, viz., along a direction substantially orthogonal to the movable belt.

Thereby, the horticultural products are attracted along a direction substantially orthogonal to the belt during their movement.

However, the machines for harvesting horticultural products of known type briefly described so far have in practice proved to be not without drawbacks.

The main drawback lies in the fact that the known machines for harvesting horticultural products are complex and cumbersome.

In fact, as briefly described above, such machines involve the use of multiple components, e.g., perforated plate, suction and outlet ducts and suction members, such as a fan. Such components, in an assembled machine configuration, are cumbersome, e.g., they do not allow the machine itself to perform manoeuvres for a movement thereof in confined agricultural spaces (e.g., greenhouses). A further drawback lies in the fact that the known machines for harvesting horticultural products are energy-intensive. In fact, such machines involve the use of suction means (viz., which suck ambient air) for processing the horticultural products. Such suction means are driven by a fan, which requires considerable amounts of energy to exert a suction action on the horticultural products along the entire extension length of the movable belt. This translates into the need to install large driving and operating members on the machine, which leads to higher energy consumption.

A further drawback lies in the fact that the known machines for harvesting horticultural products have a low overall production yield. In more detail, the suction means of such known machines do not allow to carry out a rapid and stable transport of the horticultural products moved along the movable belt, as the use of sucked air does not allow to exert a force on the horticultural products themselves of such a magnitude as to make their movement stable and thus their transit rapid.

In other words, the suction means do not allow to draw, by means of the vacuum generated by sucking ambient air, the horticultural products with a force of a magnitude satisfactory to produce a fast movement of the products themselves, with the possibility of the aforesaid products falling and sliding backwards.

This leads to fewer horticultural products being processed by the machine in the unit of time, thus resulting in a low overall yield of the same machine.

### Aims of the invention

The aim of the present invention is to provide a machine for harvesting horticultural products which allows to overcome and remedy, at least in part, the drawbacks of the known art mentioned above.

A further aim of the present invention is to provide a machine for harvesting horticultural products which is compact and/or hardly cumbersome.

A further aim of the present invention is to provide a machine for harvesting horticultural products which allows a rapid and orderly movement of the horticultural products, so as to obtain an overall production yield of the machine itself which is greater than the machines commonly found on the market.

A further aim of the present invention is to provide a machine for harvesting horticultural products which is economically advantageous or at least economically competitive with respect to the machines commonly found on the market.

A further aim of the present invention is to provide a machine for harvesting horticultural products which is constructively simple.

A further aim of the present invention is to provide a machine for harvesting horticultural products which is structurally and functionally completely reliable and safe.

A further aim of the present invention is to provide a machine for harvesting horticultural products which can be made easily, quickly and at low cost.

A further aim of the present invention is to provide a machine for harvesting horticultural products which has an alternative and/or improved configuration, in terms of both construction and function, with respect to the known traditional solutions.

### Summary

All the aims, either singly or in any combination thereof, and others which will result from the following detailed description are achieved, according to the invention, by a machine 10 for harvesting horticultural products having the characteristics set forth in independent claim 1.

In particular, the aforesaid aims are achieved with a machine 10 for harvesting horticultural products comprising a machine 10 for harvesting horticultural products, in particular leafy vegetables, comprising a support structure 20 mainly extending along a movement direction M of the machine 10, between a first end 11 and a second end 12; cutting means 30 mechanically associated with the support structure 20, arranged at the first end 11 and configured to cut the horticultural products; conveying means 40 mechanically connected to the support structure 20 and extending, along a conveying direction R, between a harvesting portion 41 arranged near the first end 11, and an outlet portion 42 arranged near a receiving area of the support structure 20, and configured to convey the cut horticultural products along the conveying direction R; motorisation means 50 mechanically associated with the conveying means 40 and configured to move them so as to convey the cut horticultural products. In which, the conveying means 40 comprise a first carrier 60; and a second carrier 70 arranged counter-facing the first carrier 60 by a predefined distance so as to define an upwards tunnel 80 of the horticultural products. The first and the second carrier 60, 70 being arranged inclined with respect to a horizontal plane substantially parallel to the ground; in which the first and second carrier 60, 70 extend along the conveying direction R so as to allow a collection of horticultural products along the conveying direction R from a starting height near the ground to a collection height greater than the starting height.

Advantageously, the machine 10 for harvesting horticultural products, in particular leafy vegetables, is flexible, as it allows a variation of the size H of the collection tunnel 80 and thus the possibility of harvesting and transporting various types of horticultural products. Advantageously, the machine 10 is compact and/or hardly cumbersome, as the movement of the conveying means 40 allows to reduce the longitudinal extension along the direction M of the machine 10 itself, which makes the machine 10 movable in confined spaces.

Advantageously, the machine 10 is economically advantageous as the conveying means 40 are economically competitive in the market with respect to the known traditional solutions.

### Brief description of the drawings

Further features and advantages of the present invention will be made clearer by the indicative, and therefore non-limiting, description of a preferred, but not exclusive, embodiment of a machine for harvesting horticultural products, as illustrated in the attached drawings, in which:

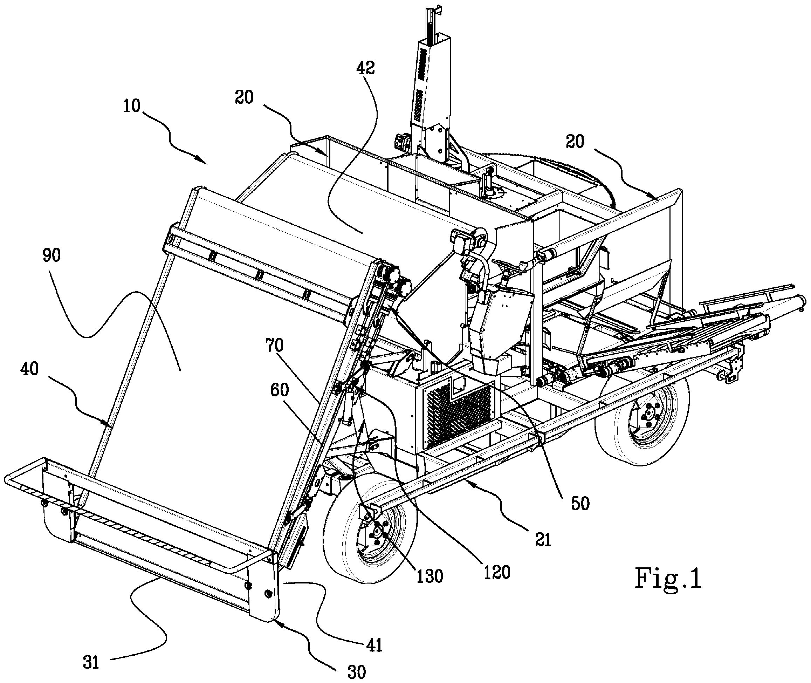

- figure 1 illustrates, according to a perspective view, a machine for harvesting horticultural products according to an embodiment of the present invention;

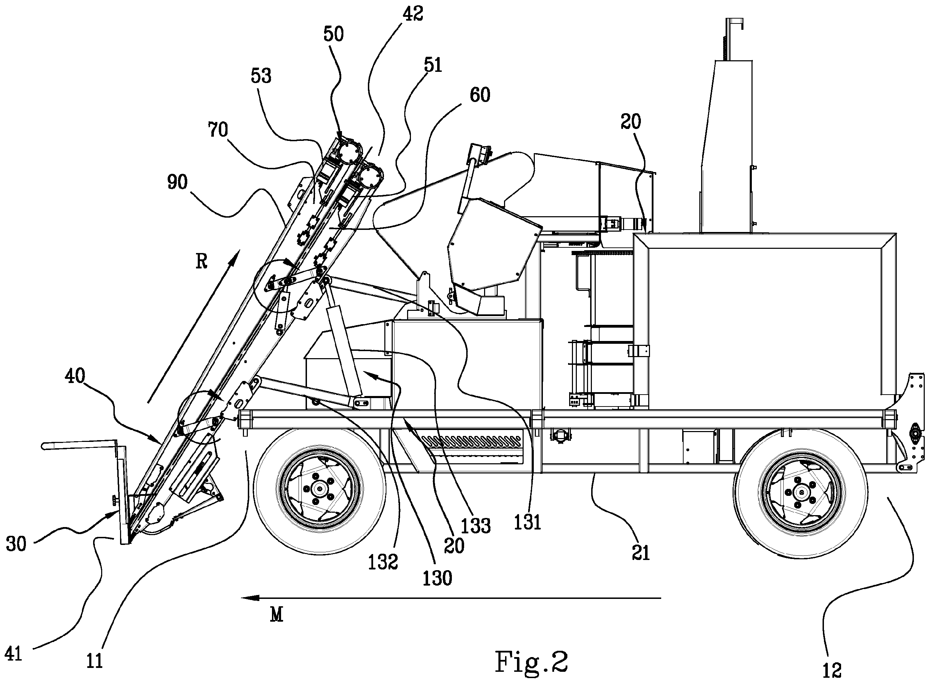

- figure 2 illustrates, according to a top plan view, the machine illustrated in figure 1;

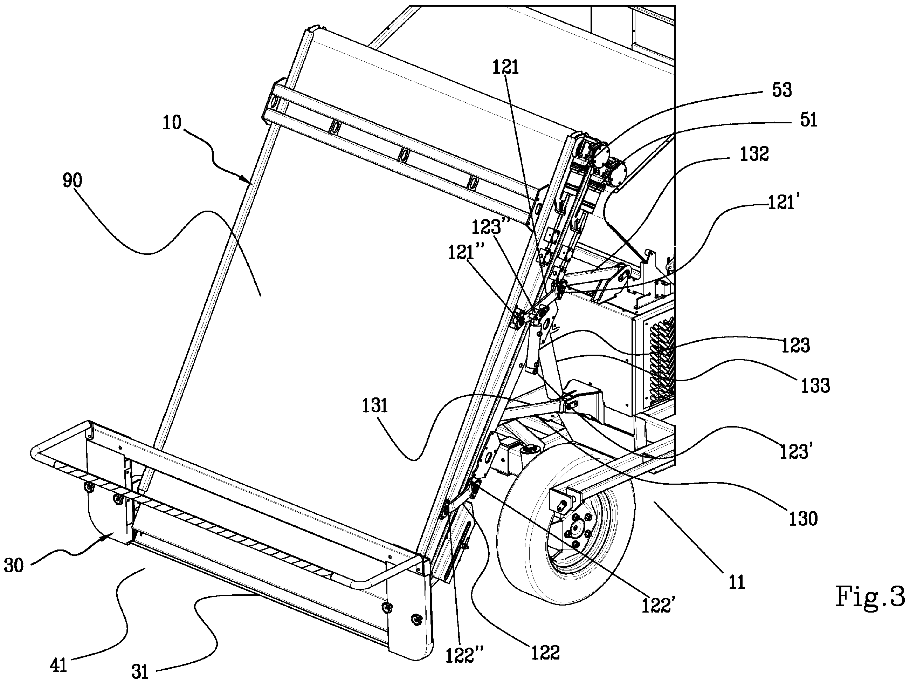

- figure 3 illustrates, according to a side view, the machine illustrated in figure 1;

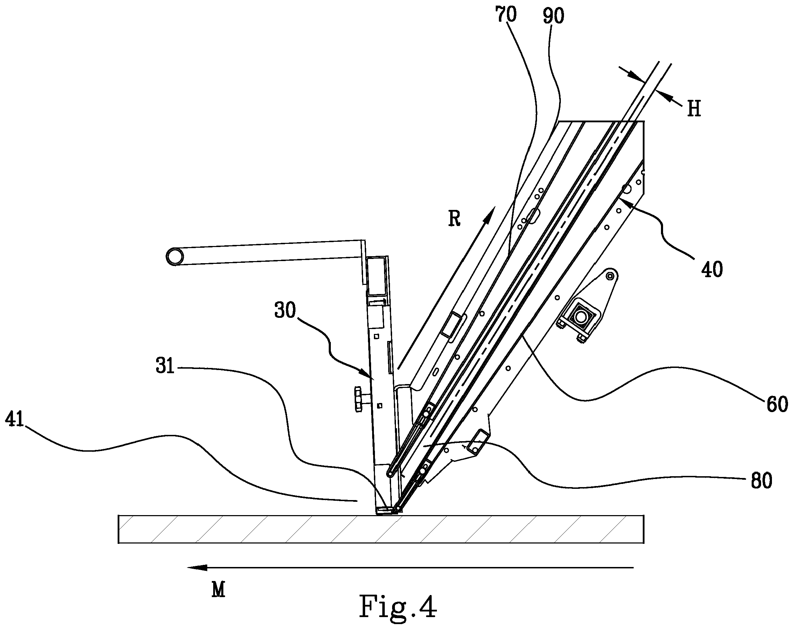

- figure 4 illustrates, according to a perspective view, a detailed portion of the machine illustrated in figure 1;
- figure 5 illustrates, according to a longitudinal sectional view, a further detailed portion of the machine illustrated in figure 1;

With reference to drawings, they serve only to illustrate embodiment methods of the invention in order to better clarify, in combination with the description, the inventive principles underlying the invention.

### Detailed description of the invention

With reference to the attached figures, a machine for harvesting horticultural products, in particular lettuce, which is the subject-matter of the present invention, is designated overall with 10.

The machine for harvesting horticultural products is advantageously used in the field of production and commercialisation of agricultural machines. In particular, the machine 10, which is the subject-matter of the present invention, advantageously fits in the field of agricultural machines intended for harvesting horticultural products of various types, such as those mentioned above and, specifically, lettuce and the like.

In the following, reference will specifically be made to a machine for harvesting lettuce, e.g., lamb's lettuce, lettuce, radicchio, rocket and the like. However, the term "machine for harvesting horticultural products" shall, for the purposes of the present description, be understood to mean any machine adapted to harvest horticultural products, in particular leafy vegetables, and more generally herbaceous plants. In accordance with an embodiment illustrated in the attached figures, the machine 10 for harvesting horticultural products, in particular leafy vegetables, comprises a support structure 20 mainly extending along a movement direction M of the machine 10, between a first end 11 and a second end 12.

In more detail, the support structure 20 comprises a frame 21 which is substantially planar and arranged substantially parallel to the ground.

Preferably, the support structure 20 and the frame 21 are made of a rigid material, e.g., metal, more in particular such as steel or the like, to give the machine 10 strength and rigidity during its movement, e.g., on cultivated farmland.

The machine 10 further comprises travel means 22, in particular wheels and/or tracks, to easily adapt to various types of terrain. Preferably, the travel means 22 are rotatably constrained to the frame 21, and configured to be rested on the ground and thus allow the machine 10 to travel on the surface of the same ground.

According to an embodiment of the invention illustrated in the attached figures, the travel means 22 comprise four wheels, in particular two wheels arranged at the front end 11, and two wheels arranged at the rear end 12.

The machine 10 further comprises a workstation for an operator, mechanically mounted on the frame 21, and configured to allow an operator to guide and move the machine 10, e.g., on a farmland of leafy vegetables, and to handle the horticultural products harvested by the machine 10 itself.

Preferably, the machine 10 further comprises a power unit, in particular a motor, e.g., an internal combustion engine or an electric motor or a hybrid motor, mechanically mounted on the frame 21 and configured to provide power for the movement of the machine 10.

The machine 10 further comprises a driveline, e.g., of mechanical or fluid-dynamic type (viz., hydraulic), configured to transmit the power generated by the power unit to the travel means 22.

In accordance with an aspect of the invention, the machine 10 further comprises cutting means 30 mechanically associated with the support structure 20, arranged at the first end 11 and configured to cut the horticultural products.

In more detail, the cutting means comprise at least one cutting blade 31 arranged, in use, substantially at a base of a horticultural product to be harvested.

In other words, the cutting blade 31 is arranged in a position near the ground so as to allow a cut, for example of a leafy vegetable, essentially at the base thereof. Thereby, the leafy vegetable is cut and then harvested substantially in its entirety.

Such a cutting blade 31 also defines a transverse section thereof which is substantially planar (viz., flat) and arranged with a face thereof, in use, substantially parallel to the ground (see figure 5).

Preferably, the cutting blade 31 is of the band type, and is configured to run along a closed path.

The machine 10 further comprises conveying means 40 mechanically connected to the support structure 20 and extending, along a conveying direction R, between a harvesting portion 41 arranged near the first end 11, and an outlet portion 42 arranged near a receiving area of the support structure 20, and configured to convey the cut horticultural products along the conveying direction R.

Preferably, the harvesting position 41 of the conveying means 40 is arranged in a position near and behind the cutting means 30 with respect to the movement direction M of the machine 10 so as to collect the horticultural products immediately after being cut.

In more detail, the conveying means 40 comprise a first carrier 60 a second carrier 70 arranged counter-facing the first carrier 60 by a predefined distance so as to define an upwards tunnel 80 of the horticultural products.

In other words, between the first carrier 60 and the second carrier 70 there is an open gap (viz., in fluid communication with the external environment), e.g., a volume of air, which defines the tunnel 80.

According to an aspect of the invention illustrated in the attached figures, the first and the second carrier 60, 70 are arranged inclined with respect to a horizontal plane substantially parallel to the ground, and extend along the conveying direction R so as to allow a harvesting of the horticultural products along the conveying direction R from a starting height near the ground to a collection height greater than the starting height.

In particular, the starting height is arranged at the harvesting portion 41, and the collection height is arranged at the outlet portion 42.

The machine 10 further comprises motorisation means 50 mechanically associated with the conveying means 40 and configured to move them so as to convey the cut horticultural products along the direction R, in particular between the harvesting portion 41 and the outlet portion 42.

In accordance with an aspect of the invention, the first carrier 60 and the second carrier 70 are mutually movable so that they can be spaced a variable distance apart so as to vary a dimension H of the upwards tunnel 80 of the horticultural products.

In more detail, the first carrier 60 is preferably fixed in position, and the second carrier 70 can preferably be spaced approaching and/or distancing from the first carrier 60.

Preferably, the second carrier 70 is substantially the same as the first carrier 60.

Advantageously, the machine 10 is quick and inexpensive to make, as functional groups assembled on the machine 10 itself, e.g., the conveying means 40, are essentially the same with considerable savings in terms of manufacturing and assembly time.

For the purpose of moving the second carrier 70 with respect to the first carrier 60, the conveying means 40 comprise an adjusting device 120 connected to the first carrier 60 and/or the second carrier 70 so as to allow an approaching or distancing movement of the second carrier 70 with respect to the first carrier 60 according to the conveying direction R.

Advantageously, the adjusting device 120 allows to vary the aforesaid dimension H of the transport tunnel 80 so as to shape the tunnel 80 in a manner suitable to receive and transport horticultural products of multiple dimensions. In fact, the movement of the second carrier 70 with respect to the first carrier 60 by means of the adjusting device 120 allows to obtain a larger or smaller dimension H depending on the type of horticultural products being harvested.

In accordance with the embodiment illustrated in the attached figures, the adjusting device 120 comprises at least two rigid bodies, in particular a first rigid body 121 and a second rigid body 122, each extending between a third end 121', 122' thereof which is rotatably connected to the first carrier 60 and a fourth end 121', 122" rotatably connected to the second carrier 70.

The adjusting device 120 further comprises at least a first actuator 123, in particular of the pneumatic or electric or fluid-dynamic type (viz., hydraulic), operatively associated preferably with the first rigid body 121, and extending between a fifth end 123' rotatably connected to the first carrier 60, and a sixth end 123" rotatably connected at an intermediate portion of the first rigid body 121, viz., a portion interposed between the third end 121' and the fourth end 121".

In more detail, the first actuator 123 is movable in extension, in particular at the sixth end 123", so as to perform a movement along a substantially circular trajectory of the second carrier 70 with respect to the first carrier 60.

In other words, during its extension, the sixth end of the first actuator 123 activates the rotary movement of the first rigid body 121 with respect to a rotation point substantially coincident with the third end 121'.

Thereby, to vary the dimension H of the tunnel 80, the sixth end of the first actuator 123 can be driven in extension so as to rotate the first rigid body 121 connected to the second carrier 70, around the third end.

Preferably, the adjusting device 120 is connected to the first rigid body 121, while the second rigid body 122 is dragged in rotation by the first rigid body 121, viz., the second rigid body 122 is idle.

Preferably, the first rigid body 121 is shaped in a substantially similar manner to the second rigid body 122.

Preferably, in accordance with an embodiment not illustrated in the attached figures, the first actuator 123 can be mechanically connected to the second rigid body 122 so as to drive it in rotation around the corresponding third end 122', and the first rigid body 121 is preferably idle.

The adjusting device 120 defines a first articulated mechanism, in particular a flat articulated mechanism, e.g., a quadrilateral-type mechanism.

In accordance with an aspect of the invention, the machine 10 preferably comprises synchronisation means connected to the motorisation means 50 and configured to synchronise the movement of the first carrier 60 with the movement of the second carrier 70.

In more detail, as illustrated in the attached figures, the motorisation means 50 comprise a first motor 51 mechanically connected to the first carrier 60 and configured to move the first carrier 60; and a second motor 53 mechanically connected to the second carrier 70 and configured to move the

second carrier 70. In particular, the first motor 51 and the second motor 53 are independent and decoupled from each other.

Advantageously, the first carrier 60 and the second carrier 70 can be moved by the first motor 51 and by the second motor 53 independently. Consequently, an operator can set movement speeds of the first carrier 60 with respect to the second carrier 70 which are equal to each other or different. This makes the conveying means 40 and thus the machine 10 flexible during the operation thereof.

Preferably, the first motor 51 and the second motor 53 are the same.

Otherwise, in accordance with a further embodiment not illustrated in the attached figures, the motorisation means 50 comprise a motor 51 mechanically connected to the first carrier 60 and configured to drive it; and a driveline 52 mechanically connected between the motor 51 and the second carrier 70 to move the second carrier 70, where the driveline 52 defines the synchronisation means.

In more detail, the driveline 52 is preferably mechanical, and comprises a first pulley rotatably mounted on the first motor 51, a second pulley rotatably mounted on the second carrier 70, and a belt looped between the first pulley and the second pulley to transmit power between the two and thus
drag the second carrier 70 in movement.

Preferably the first pulley and the second pulley are toothed.

Preferably, the belt is toothed.

Otherwise, the first and the second pulley can be replaced by corresponding sprockets, preferably connected to each other by a chain.

In accordance with an aspect of the invention, the first carrier 60 has an extension, along the conveying direction R, which is greater than the extension of the second carrier 70 so that it protrudes from the support structure 20 to allow an easy withdrawal and subsequent storage of the horticultural products in the support structure 20 by an operator.

Thereby, the harvested horticultural products are transported within the machine 10, in particular at the outlet portion 42 arranged within the support structure 20. This results in an easy and rapid handling of the horticultural products by an operator.

In accordance with an aspect of the invention, the conveying means 40 preferably comprise transport belts 90 having respective transport surfaces opposite each other and facing the tunnel 80.

Preferably, the transport belts 90 have an extension in width which is perpendicular with respect to the conveying means 40 and parallel to the extension of the cutting means 30. In other words, the transport belts 90 of the conveying means extend along a direction substantially orthogonal to the movement direction M of the machine 10 and with respect to the conveying direction R. In fact, in use, the belts 90 have an extension in width which is substantially parallel to the ground.

Preferably, the first carrier 60 and the second carrier 70 define a profile of a longitudinal section thereof along the conveyor direction R which is of the sawtooth type, to facilitate the movement of the horticultural products.

More specifically, the belts 90 of the conveying means 40 define a shape of their respective surfaces which is of the sawtooth type.

Thereby, the movement of the horticultural products along such belts 90 is stable, as the sawtooth profile of the surface of such belts 90 increases the friction coefficient between a horticultural product and the surface of the belt 90 itself.

This results in a safe, rapid and precise movement of the above-mentioned horticultural products, with no danger of falling and/or slipping.

Preferably, the belts 90 are made of polymer material, such as polyvinyl chloride (PVC). Preferably, the first carrier 60 and the second carrier 70 are arranged inclined by an angle θ, with respect to the horizontal plane substantially parallel to the ground, comprised between 605° and 80°, preferably comprised between 60° and 70°.

In other words, the first carrier 60 and the second carrier 70 are arranged, in use, inclined by an inclination angle equal to θ with respect to the ground, so as to create a ramp or chute to allow the harvesting of the aforesaid horticultural products.

In addition, the value of such an angle θ is preferably variable; in particular the angle θ can assume substantially any value comprised in the above-mentioned range. Such a variation of the angle θ is achieved by moving the first carrier 60 and the second carrier 70 by means of a positioning member 130 (introduced and described in more detail below).

According to an aspect of the invention, the positioning member 130 moves the conveying means 40, raising and/or lowering them with respect to the ground, so as to vary the arrangement thereof with respect to a plane substantially parallel to the same ground (as described in more detail below).

Advantageously, the machine 10 is compact and/or hardly cumbersome, in that it is possible to arrange such first and second carriers 60, 70 according to an angle θ substantially equal to 60°, and preferably variable in the above-mentioned range, so as to reduce the extension of the machine 10 along the movement direction M.

In accordance with the embodiment illustrated in the attached figures, the machine 10 further comprises a positioning member 130 which mechanically connects the conveying means 40 to the support structure 20 and is configured to move the conveying means 40 so as to vary the angle θ.

In particular, the positioning member 130 is arranged at the front end 11 of the support structure 20, and mechanically connects the front end 11 to the first carrier 60.

In more detail, the positioning member 130 comprises at least two bars 131, 132 which mechanically connect the support structure 20 to the first carrier; and at least a second actuator 133, in particular of the hydraulic type, configured to extend and move the conveying means 40 with respect to the support structure 20. In particular, such movement preferably occurs along a substantially circular trajectory.

Preferably, the at least two bars 131, 132 are arranged at a side portion of the support structure 20.

Preferably, the machine 10 comprises four bars, arranged substantially opposite each other with respect to an axis of longitudinal symmetry of the machine 10.

According to an aspect of the invention, the at least two bars 131, 132 define a second articulated mechanism, in particular a second quadrilateral mechanism preferably of the flat type. Such a second quadrilateral mechanism is driven by means of the second actuator 133, in particular by means of an extension of the second
actuator 133 itself.

Thereby, the conveying means 40 perform a movement along an essentially circular trajectory by means of the two bars 131, 132. This results, overall, in a substantially vertical raising and/or lowering of the aforesaid conveying means 40.

Thereby, in addition to the movement of the second carrier 70 with respect to the first carrier 60 of the conveying means 40, it is possible to obtain an additional movement of the conveying means 40 as a whole, and thus to vary the inclination angle θ of the first carrier 60 and the second carrier 70 with respect to the horizontal plane parallel to the ground.

In other words, the positioning member 130 moves the first carrier 60 and thus consequently the second carrier 70, so as to change the angle θ and thus the slope of the conveying direction R of the horticultural products.

Thereby, in particular in the event of a value of the angle θ equal to 45°, it is possible to achieve a considerable reduction in the extension in length, viz., along the direction M, of the machine 10. It follows that the machine 10 is compact and suitable to be moved within a narrow terrain, or comprising various types of obstacles to be circumvented, such as plants, poles and the like.

From what has been described, it is clear that the machine for harvesting horticultural products, according to the invention, is particularly advantageous because:
- it is capable of overcoming, at least in part, the drawbacks of the above-mentioned known art;
- it is compact and/or hardly cumbersome, in fact allowing it to be moved in small spaces, such as those belonging to a greenhouse, a grapevine or the like;
- it is efficient and effective during its operation. In fact, it allows a rapid harvesting of horticultural products, which leads to an increase in the overall production yield (viz., number of horticultural products harvested in the unit of time). In addition, it allows precise harvesting of the horticultural products themselves without damaging them during their movement;
- it is structurally strong and functionally completely reliable;
- it is simple and inexpensive to make;
- it is industrially feasible with traditional manufacturing systems and known construction techniques;
- it can be easily maintained and/or inspected by an operator;
- is can be easily assembled and/or disassembled by an operator;
- it has an alternative and/or improved configuration, in both constructional and functional terms, with respect to the known traditional solutions.

It is clear from the above description how the packaging machine which is the subject-matter of the present invention achieves the preset aims.

The present invention has been illustrated and described in a preferred embodiment thereof, but it is understood that embodiment variants can be made thereto in practice, without going beyond the scope of protection of the present patent for industrial invention.

## Claims

1. Machine (10) for harvesting horticultural products, in particular leafy vegetables, comprising:
- a support structure (20) mainly extending along a movement direction (M) of the machine (10), between a first end (11) and a second end (12);
- cutting means (30) mechanically associated with said support structure (20), arranged at said first end (11) and configured to cut said horticultural products;
- conveying means (40) mechanically connected to said support structure (20) and extending, along a conveying direction (R), between a harvesting portion (41) arranged near said first end (11), and an outlet portion (42) arranged near a receiving area of said support structure (2), and configured to convey said cut horticultural products along said conveying direction (R);
- motorisation means (50) mechanically associated with said conveying means (40) and configured to move them so as to convey said cut horticultural products;
**characterised in that** said conveying means (40) comprise:
- a first carrier (60); and
- a second carrier (70) arranged counter-facing said first carrier (60) by a predefined distance so as to define an upwards tunnel (80) of said horticultural products; said first and second carriers (60, 70) being arranged inclined with respect to a horizontal plane substantially parallel to the ground; said first and second carriers (60, 70) extending along said conveying direction (R) so as to allow a harvesting of said horticultural products along said conveying direction (R) from a starting height near the ground to a collection height greater than said starting height.

2. Machine (10) for harvesting horticultural products according to claim 1, wherein said conveying means (40) comprise transport belts (90) having respective transport surfaces opposite each other and facing said tunnel (80).

3. Machine (10) for harvesting horticultural products according to claim 2, wherein said transport belts (90) have an extension in width which is perpendicular with respect to said conveying means (40) and parallel to the extension of said cutting means (30).

4. Machine (10) for harvesting horticultural products according to any one of the preceding claims, wherein said first carrier (60) and said second carrier (70) are mutually movable so as to be spaced by a variable distance so as to vary a dimension (H) of said upwards tunnel (80).

5. Machine (10) for harvesting horticultural products according to any one of the preceding claims, wherein said first carrier (60) being fixed in position, and said second carrier (70) can be spaced in approach and/or distancing from said first carrier (60).

6. Machine (10) for harvesting horticultural products according to claim 4 or 5, wherein said conveying means (40) comprise an adjusting device (120) connected to said first carrier (60) and/or to said second carrier (70), so as to allow an approaching or distancing movement of said second carrier (70) with respect to said first carrier (60) according to said conveying direction (R).

7. Machine (10) for harvesting horticultural products according to any one of the preceding claims, comprising synchronisation means (110) connected to said motorisation means (50) and configured to synchronise the movement of said first carrier (60) with the movement of said second carrier (70).

8. Machine (10) for harvesting horticultural products according to claim 6, wherein said motorisation means (50) comprise:
- a motor (51) mechanically connected to said first carrier (60) and configured to drive it;
- a driveline (52) mechanically connected between said motor (51) and said second carrier (70) for moving said second carrier (70), wherein said driveline (52) defines said synchronisation means (110).

9. Machine (10) for harvesting horticultural products according to any one of claims 1 to 6, wherein said motorisation means (50) comprise:
- a first motor (51) mechanically connected to said first carrier (60) and configured to move said first carrier (60);
- a second motor (53) mechanically connected to said second carrier (70) and configured to move said second carrier (70);
said first motor (51) and said second motor (53) being independent and decoupled from each other.

10. Machine (10) for harvesting horticultural products according to one or more of the preceding claims, wherein said first carrier (60) has an extension, along said conveying direction (R), greater than the extension of said second carrier (70) so as to protrude from said support structure (20) to allow an easy withdrawal and subsequent storage of said horticultural products in said support structure (20) by an operator.

11. Machine (10) for harvesting horticultural products according to one or more of the preceding claims, wherein said first carrier (60) and said second carrier (70) define a profile of a longitudinal section thereof executed along said conveying direction (R) of the sawtooth type, to facilitate the movement
of said horticultural products.

12. Machine (10) for harvesting horticultural products according to one or more of the preceding claims, wherein said harvesting position (41) of said conveying means (40) is arranged in a position near and in front with respect to said cutting means (30) with respect to said movement direction (M) of said machine (10) so as to harvest said horticultural products immediately after their cutting.

13. Machine (10) for harvesting horticultural products according to one or more of the preceding claims, wherein said first carrier (60) and said second carrier (70) are arranged inclined by an angle θ, with respect to said horizontal plane substantially parallel to the ground, comprised between 15° and 70°, preferably comprised between 30° and 45°.

14. Machine (10) for harvesting horticultural products according to claim 13, comprising a positioning member (130) which mechanically connects said conveying means (40) to said support structure (20) and configured to move said conveying means (40) so as to vary said angle θ.
